# EUROPEAN PATENT APPLICATION

(11) **EP 2 485 452 A2**
(43) Date of publication of application: **08.08.2012**
(21) Application number: 11165635.1
(22) Date of filing: 11.05.2011
(51) Int. Cl.: H04L 29/06

(54) **Systems and methods for establishing a communication session between communication devices**

(30) Priority: 07.02.2011 US 440385 P; 03.05.2011 US 100200
(71) Applicant: Ayuso de Paul, Joaquin, Santa Monica, CA 90401 (US)
(72) Inventor: Ayuso de Paul, Joaquin, Santa Monica, CA 90401 (US)
(74) Representative: Benson, Christopher

(57) **Abstract**

Embodiments of the invention include systems and methods for establishing a communication session between an inviter communication device (104) and an invitee communication device (102). Data messages to be exchanged between inviter communication device (104) and the invitee communication device (102) without any other entity or communication device being able to analyze, access or understand the data messages. To exchange data messages, a bucket for storing the data messages is set up on a server (108) or other database. A bucket uniform resource identifier is generated by the server (108) and provided to the inviter and invitee communication devices (102). The inviter and invitee communication devices (104,102) send each other data messages via the bucket uniform resource identifier.

## Description

### Claim of Priority

The present patent application claims priority to U.S. Patent Application No. 61/440,385 entitled "Systems and Methods for Conducting Financial Transactions with a Mobile Device," filed February 7, 2011, and also to U.S. Patent Application No. 13/100,200 entitled "Systems and Methods for Establishing a Communication Session between Communication Devices," filed on May 3, 2011.

### BACKGROUND

When exchanging data messages between two or more entities or communication devices, it is important to protect the data messages from being analyzed, accessed or understood by other entities or communication devices. In the event that other entities do access these messages, many problems can arise, such as identity theft. For example, if a first communication device sends a data message to a second communication device to authenticate itself, the identity information in the data message can be stolen by a user (or employee) associated with the second communication device. Using this information, the user (or employee) can assume the identity of the first communication device.

If the exchange of data messages is occurring during a financial transaction with a merchant, the data messages sent to the merchant can include credit card information, such as credit card number, expiration date, name of card and security pin. This information is typically provided to the merchant using a credit card payment terminal or point-of-sale (POS) system with a communications link to an acquiring bank of the merchant. Data from the card is typically obtained from a magnetic stripe or chip on the card. As the merchant has access to this information, the merchant, or employees of the merchant, may fraudulently use this information to commit financial identity theft by acquiring goods and services using the credit card information. An additional problem associated with credit cards is that they can be easily lost or misplaced by the consumer.

### SUMMARY

There remains a need therefore for systems and methods which allow data messages to be exchanged between two or more entities or communication devices without any other entity or communication device being able to analyze, access or understand the data messages. The present systems and methods accomplish these objectives.

One feature provides a method operational in an inviter communication device for establishing a communication session. The method includes sending a request to establish the communication session with an invitee communication device, the request, sent to the invitee communication device via a server, includes an inviter public key and an invitee identification; and receiving a bucket uniform resource identifier and an invitee public key from the server upon acceptance of the request by the invitee communication device, the bucket uniform resource identifier identifying a location for storing data messages exchanged during the communication session.

Another feature provides an inviter communication device for establishing a communication session with an invitee communication device. The inviter communication device may include a processing circuit coupled to a memory device, for storing an inviter public/private key pair, and a network communication interface for providing connectivity to a server and the invitee communication device. The processing circuit is configured to send a request to establish the communication session with an invitee communication device, the request, sent to the invitee communication device via a server, includes an inviter public key and an invitee identification; and receive a bucket uniform resource identifier and an invitee public key from the server upon acceptance of the request by the invitee communication device, the bucket uniform resource identifier identifying a location for storing data messages exchanged during the communication session.

Another feature provides an inviter communication device for establishing a communication session with an invitee communication device, which inviter communication device includes means for sending a request to establish the communication session with an invitee communication device, the request, sent to the invitee communication device via a server, includes an inviter public key and an invitee identification; and receiving a bucket uniform resource identifier and an invitee public key from the server upon acceptance of the request by the invitee communication device, the bucket uniform resource identifier identifying a location for storing data messages exchanged during the communication session.

Yet another feature provides a computer-readable medium that includes instructions for an inviter communication device to establish a communication session with an invitee communication device. When executed by a processor, the instructions may cause the processor to send a request to establish the communication session with an invitee communication device, the request, sent to the invitee communication device via a server, includes an inviter public key and an invitee identification; and receive a bucket uniform resource identifier and an invitee public key from the server upon acceptance of the request by the invitee communication device, the bucket uniform resource identifier identifying a location for storing data messages exchanged during the communication session.

A method operational in an invitee communication device for establishing a communication session is also provided. The method includes receiving a request to establish the communication session with an inviter communication device via a server, the request including an inviter public key and a bucket uniform resource identifier, the bucket uniform resource identifier identifying a location on the server for storing data messages exchanged during the communication session; and sending an invitee public key to the bucket uniform resource identifier on the server upon acceptance of the request.

Another feature provides an invitee communication device for establishing a communication session with an inviter communication device. The invitee communication device may include a processing circuit coupled to a memory device, for storing an invitee public/private key pair, and a network communication interface for providing connectivity to a server and the inviter communication device. The processing circuit is configured to receive a request to establish the communication session with an inviter communication device via the server, the request including an inviter public key and a bucket uniform resource identifier, the bucket uniform resource identifier identifying a location on the server for storing data messages exchanged during the communication session; and send an invitee public key to the bucket uniform resource identifier on the server upon acceptance of the request.

Another feature provides an invitee communication device for establishing a communication session with an inviter communication device, which invitee communication device includes means for receiving a request to establish the communication session with an inviter communication device via a server, the request including an inviter public key and a bucket uniform resource identifier, the bucket uniform resource identifier identifying a location for storing data messages exchanged during the communication session; and means for sending an invitee public key to the bucket uniform resource identifier on the server upon acceptance of the request.

Yet another feature provides a computer-readable medium that includes instructions for an invitee communication device to establish a communication session with an inviter communication device. When executed by a processor, the instructions may cause the processor to receive a request to establish the communication session with an inviter communication device via the server, the request including an inviter public key and a bucket uniform resource identifier, the bucket uniform resource identifier identifying a location on the server for storing data messages exchanged during the communication session; and send an invitee public key to the bucket uniform resource identifier on the server upon acceptance of the request.

A method operational in server for establishing a communication session between an inviter communication device and an invitee communication device is also provided. The method includes receiving a request from the inviter communication device to establish the communication session with the invitee communication device; generating a bucket uniform resource identifier identifying a location on the server for storing data messages exchanged during the communication session; sending the request and bucket resource identifier to the invitee communication device; and sending an invitee public key and the bucket uniform resource identifier to the inviter communication device upon receiving a response accepting the request by the invitee communication device.

Another feature provides a server for establishing a communication session between an inviter communication device and an invitee communication device. The server may include a processing circuit coupled to a memory device, for storing keys, identifiers and data messages, and a network communication interface for providing connectivity to the invitee communication device and the invitee communication device. The processing circuit is configured to receive a request from the inviter communication device to establish the communication session with the invitee communication device; generate a bucket uniform resource identifier identifying a location for storing data messages exchanged during the communication session; send the request and bucket resource identifier to the invitee communication device; and send an invitee public key and the bucket uniform resource identifier to the inviter communication device upon receiving a response accepting the request by the invitee communication device.

Another feature provides a server for establishing a communication session with an inviter communication device and an invitee communication device, which server includes means for receiving a request from the inviter communication device to establish the communication session with the invitee communication device; means for generating a bucket uniform resource identifier identifying a location on the server for storing data messages exchanged during the communication session; means for sending the request and bucket resource identifier to the invitee communication device; and means sending an invitee public key and the bucket uniform resource identifier to the inviter communication device upon receiving a response accepting the request by the invitee communication device.

Yet another feature provides a computer-readable medium that includes instructions for a server to establish a communication session between an inviter communication device and an invitee communication device. When executed by a processor, the instructions may cause the processor to receive a request from the inviter communication device to establish the communication session with the invitee communication device; generate a bucket uniform resource identifier identifying a location on the server for storing data messages exchanged during the communication session; send the request and bucket resource identifier to the invitee communication device; and send an invitee public key and the bucket uniform resource identifier to the inviter communication device upon receiving a response accepting the request by the invitee communication device.

### DRAWINGS

FIG. 1 is a block diagram illustrating a wireless communication system in which a communication session is established between an inviter communication device and an invitee communication device via a bucket uniform resource identifier (URI) established by a server.
FIG. 2 (comprising FIGS. 2A and 2B) is a flow diagram illustrating a bucket communication methodology for exchanging data messages between an inviter communication device and an invitee communication device in accordance with an embodiment of the present invention.
FIG. 3 (comprising FIGS. 3A, 3B and 3C) is a flow diagram illustrating the operation of a wireless communication system in which an inviter communication device may be used to communicate with an invitee communication device.
FIG. 4 is a block diagram illustrating an example of an inviter communication device configured to establish a communication session with an invitee communication device.
FIG. 5 is a flow diagram illustrating a method operational in an inviter communication device for establishing a communication session with an invitee communication device.
FIG. 6 (comprising FIGS. 6A and 6B) is a flow diagram illustrating an exemplary method operational in a mobile device for conducting a financial transaction with a merchant device.
FIG. 7 is a block diagram illustrating an example of an invitee communication device configured to establish a communication session with an inviter communication device.
FIG. 8 is a flow diagram illustrating a method operational in an invitee communication device for establishing a communication session with an inviter communication device.
FIG. 9 is a flow diagram illustrating a method operational in a merchant device for conducting a financial transaction with a mobile device.
FIG. 10 is a block diagram illustrating an example of a server configured to establish a communication session between an inviter communication device and an invitee communication device.
FIG. 11 is a flow diagram illustrating an exemplary method operational in a server for facilitating a communication session between an invitee communication device and an inviter communication device.
FIG. 12 (comprising FIGS. 12A and 12B) is a flow diagram illustrating an exemplary method operational in a server for facilitating a financial transaction between a mobile device and a merchant device.
FIG. 13 illustrates a log-in screen in accordance with an embodiment of the present invention.
FIG. 14 is a flow diagram illustrating one example of authenticating a mobile device prior to effecting a financial transaction with a merchant device.
FIG. 15 illustrates an identifier screen in accordance with an embodiment of the present invention.
FIG. 16 is a flow diagram illustrating initializing a bucket for communications between the mobile device and the merchant device.
FIG. 17 illustrates a transaction summary screen in accordance with an embodiment of the present invention.
FIG. 18 illustrates a payment screen in accordance with an embodiment of the present invention.
FIG. 19 illustrates an add payment screen in accordance with an embodiment of the present invention.
FIG. 20 is a flow diagram illustrating a method of payment between the mobile device and the merchant device.
FIG. 21 is a flow diagram illustrating a payment transaction between the mobile device and the merchant device.
FIG. 22 illustrates a payment confirmation screen in accordance with an embodiment of the present invention.
FIG. 23 is a flow diagram illustrating a financial transaction between a mobile device and a merchant device using near field communications (NFC) instead of a two dimensional code.
FIG. 24 is a flow diagram illustrating a financial transaction between a mobile device and a merchant device using near field communications (NFC) with no network connectivity for the mobile device.
FIG. 25 is a flow diagram illustrating a financial transaction between a mobile device and a merchant device using near field communications (NFC) with no network connectivity.

### DESCRIPTION

In the following description, specific details are given to provide a thorough understanding of the embodiments. However, it will be understood by one of ordinary skill in the art that the embodiments may be practiced without these specific details. For example, circuits may be shown in block diagrams in order avoid obscuring the embodiments in unnecessary detail. In other instances, well-known circuits, structures and techniques may not be shown in detail in order not to obscure the embodiments.

### Definitions

As used herein, the following terms and variations thereof have the meanings given below, unless a different meaning is clearly intended by the context in which such term is used.

"Adapted for," means configured, employed, implemented, or programmed, as well as any combination thereof, to carry out some process, function, step or routine.

"Data messages" refer to data or information generated, sent, received or stored by electronic means.

"Bucket" refers to an abstract container on a server or other database, or a specific address or group of addresses, which stores or links to data messages to be transmitted between two or more entities or communication devices.

"Bucket Uniform resource identifier" refers to a string of characters used to identify a name, a resource or location (or storage address) where entities or communication devices can leave data messages for each other.

"Financial transaction" refers to the exchange of an item, good or service for money or other consideration.

"Financial institution" refers to an entity, such as a bank, which provides financial services for its clients or members.

"User" refers to any entity which accesses information through a communication network, including, but not limited to the Internet, as well as any individual, consumer or entity that purchases or makes a decision to purchase a product or is contemplating the purchase of a product.

"Product" refers to any goods or services that are intended for a user.

"Mobile device" refers to smart phones, mobile phones, pagers, personal digital assistants, personal information managers (PIMs) and/or other devices which communicate, at least partially, through a wireless communication platform, such as a cellular network.

"Merchant" refers an individual or business entity, such as a retailer, that sells commodities, products or services to users.

"Merchant device" refers to a checkout system or point of sale terminal used by merchants to track and complete financial transactions with users. A scanner may be integrated into the merchant device or may be external to the merchant device and can provide an interface and data connection to the mobile device.

The term "comprise" and variations of the term, such as "comprising" and "comprises," are not intended to exclude other additives, components, integers or steps. The terms "a," "an," and "the" and similar referents used herein are to be construed to cover both the singular and the plural unless their usage in context indicates otherwise. The word "exemplary" is used herein to mean "serving as an example, instance, or illustration." Any implementation or embodiment described herein as "exemplary" is not necessarily to be construed as preferred or advantageous over other embodiments or implementations. Likewise, the term "embodiments" does not require that all embodiments include the discussed feature, advantage or mode of operation.

### Network Environment

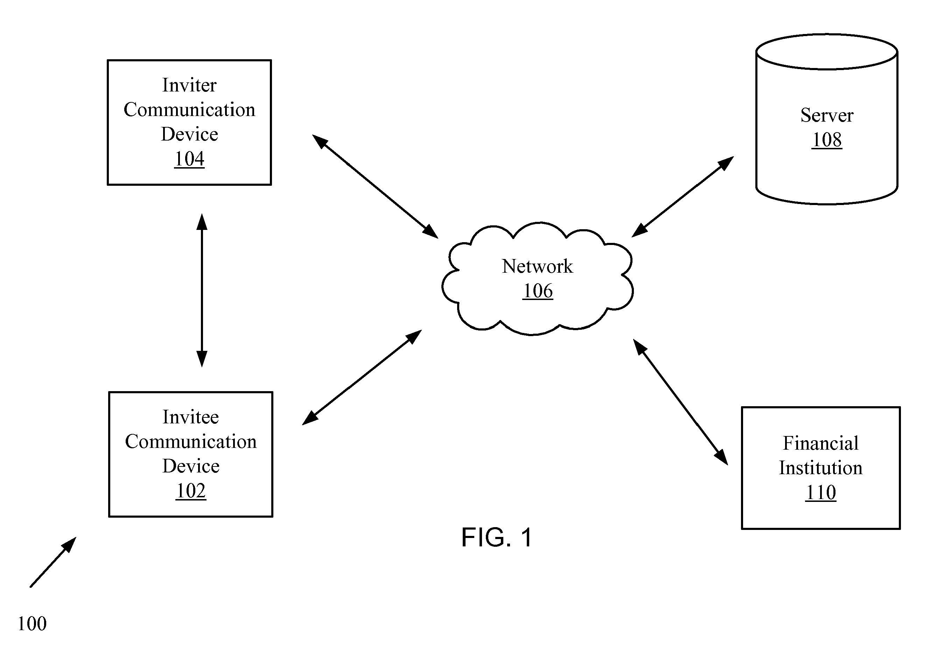

FIG. 1 is a block diagram illustrating a wireless communication system 100 in which a communication session is established between an invitee communication device 102 and an inviter communication device 104 via a bucket and/or a bucket uniform resource identifier (URI) established by a server 108. As described above, the bucket may be an abstract container on a server or other database, or a specific address or group of addresses, which stores or links to data messages to be transmitted or exchanged between two or more entities. The bucket URI may be a string of characters used to identify a name, a resource or location (or storage address) where the inviter and invitee communication devices can leave data messages for each other. The invitee and inviter communication devices 102, 104 can be coupled to a network 106, such as the Internet, through which each communicates with the server 108 for exchanging data messages with the other device without any other entity being able to analyze, access or understand the data messages.

In one implementation, the wireless communication system 100 can be used to effectuate a financial transaction between the inviter (mobile device) and invitee (merchant device) communication devices 104, 102. As described below in more details, the mobile device can purchase a product from the merchant device using a financial account in which payment information can be sent to the merchant device, via the bucket, and forwarded to a financial institution 110 for processing of the payment by the financial institution 110. The merchant device may never have direct access to specifics of the payment information. For example, the merchant device does not have access to the credit card information.

### Bucket Communications

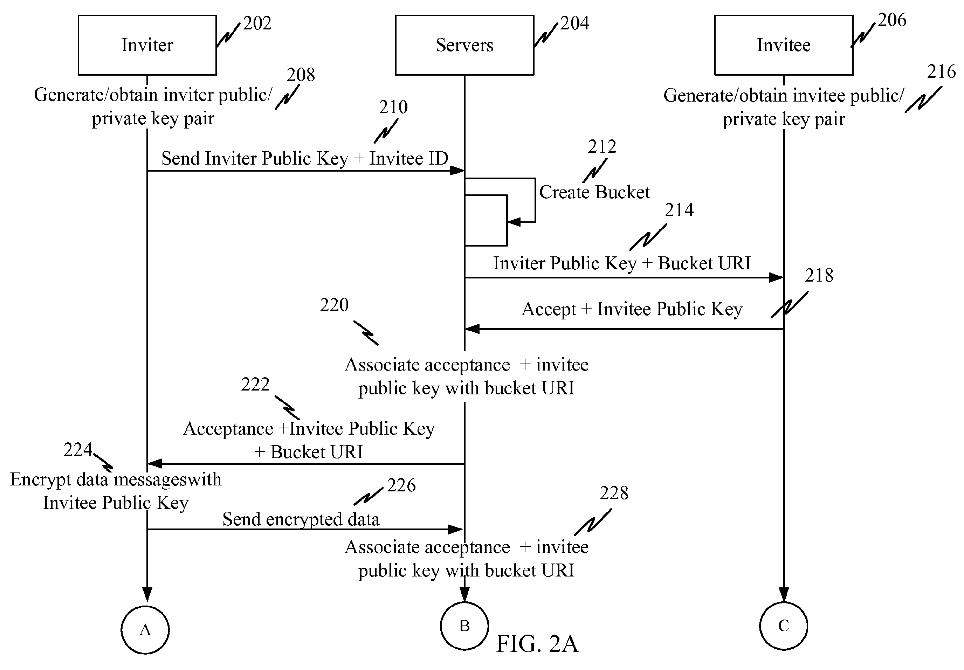

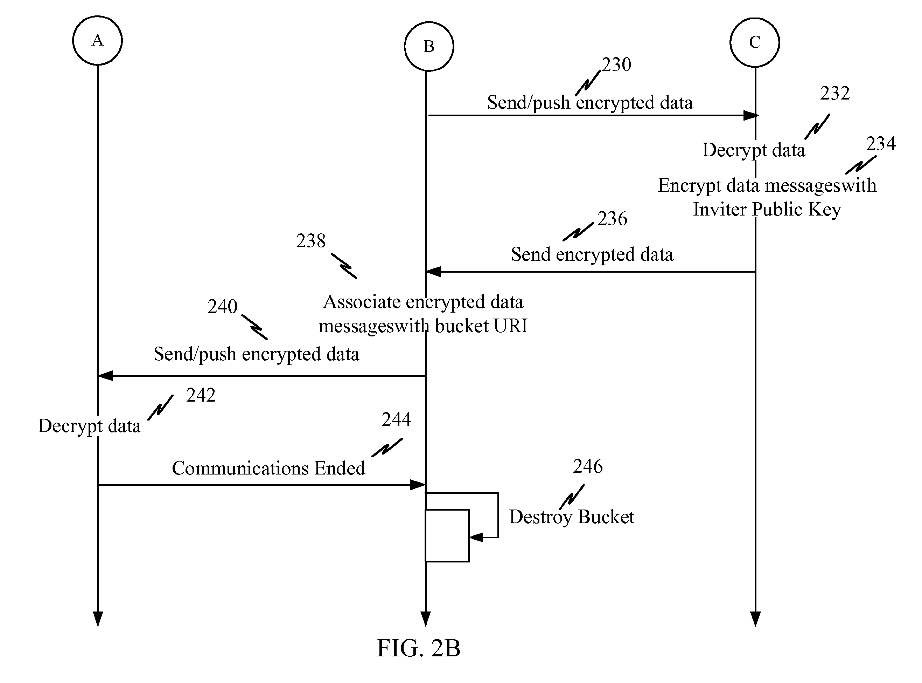

FIG. 2 (comprising FIGS. 2A and 2B) is a flow diagram illustrating a bucket communication methodology for exchanging data messages between an inviter (communication device) and an invitee (communication device) in accordance with an embodiment of the present invention. As described above, a bucket can be an abstract container on a server or other database, or a specific address or group of addresses, which stores or links to data messages to be transmitted or exchanged between two or more entities, such as the inviter communication device and the invitee communication device. In one implementation, a Pretty Good Privacy (PGP)-like approach can be used allowing the data messages to be exchanged between two or more entities or devices without any other entity being able to analyze, access or understand the information.

As shown, a first entity, an inviter 202 can invite a second entity, an invitee 204, to communicate, via a server 206, using a bucket based communication methodology. The inviter 202 can obtain or generate an inviter public/private key pair comprising an inviter public key and a corresponding inviter private key 208. To establish the bucket which stores or links to the data messages, the inviter can send the inviter public key, along with invitee identification information, to the server 210. The invitee identification information can be used by the server to identify the invitee. The server can then create a bucket by identifying a bucket uniform resource identifier (URI) to be used to store (or link) and exchange data messages between the inviter and invitee 212. Next, the server can send a request for a communication session with the inviter, on behalf of the inviter, to the invitee, along with the inviter public key and bucket URI 214. The invitee, having generated or obtained an invitee public/private key pair comprising an invitee public key and a corresponding invitee private key 216, can, upon receiving request, accept the request to communicate with the inviter and send an acceptance, along with its invitee public key to the server 218. Alternatively, the invitee can decline the request to establish a communication session.

The acceptance and invitee public key may be stored at or associated (linked) with the bucket URI 220. The server may then notify the inviter of the invitee's acceptance by sending or pushing to the inviter the invitee public key and the bucket URI to be used to exchange data messages 222.

Once the invitee has accepted the request and the bucket has been established by the server, the inviter can encrypt data messages for the invitee using the invitee public key 224 and send the encrypted data messages intended for the invitee to the bucket, via the bucket URI, on the server 226. The encrypted data messages intended for the invitee may be stored at or associated (linked) with the bucket URI 228. Long polling can be used, for example, to push the data messages from the bucket on the server to the invitee and inviter. With long polling, the inviter and invitee can request information from the server in a similar way to a normal poll; however, if the server does not have any data messages available in the bucket, instead of sending an empty response, the server holds the request and waits for some data messages to be available. Once the data messages become available (or after a suitable timeout), a complete response can be sent to the requesting party. The requesting party will normally then immediately re-request information from the server, so that the server will almost always have an available waiting request that it can use to deliver data messages in response to an event or receiving data messages.

Using long polling, the server can send or push the data messages, encrypted with the invitee public key, to the invitee 230. The invitee can decrypt the data messages 232 with its invitee private key and in response to the decrypted data messages, encrypt a response using the inviter public key 234 and send an encrypted response (data message) to the bucket on the server 236. The encrypted data may be stored at or associated (linked) with the bucket URI 238. The encrypted data messages can then be sent or pushed, using long polling, from the server to the inviter 240. The inviter can then decrypt the data messages using its inviter private key 242. Optionally, once the exchange of data messages between the inviter and invitee has been completed, the inviter can notify the server that the communication session has ended 244. After the server has been notified that the communication session between the inviter and the invitee has ended, the server can destroy the data messages stored in the bucket and/or associated with the bucket URI 246.

### Communications using Bucket Uniform Resource Identifier

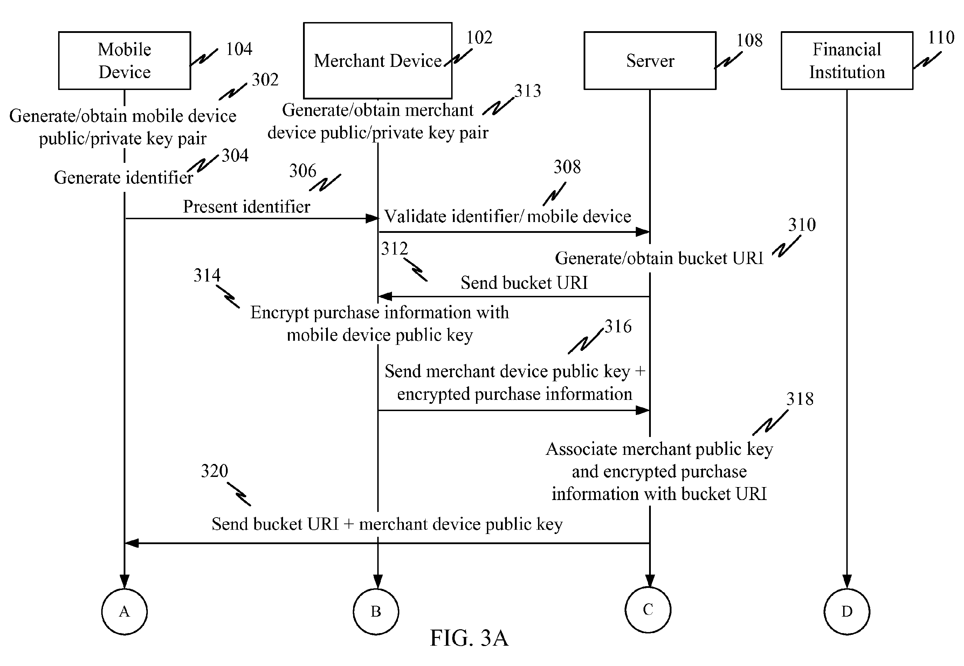

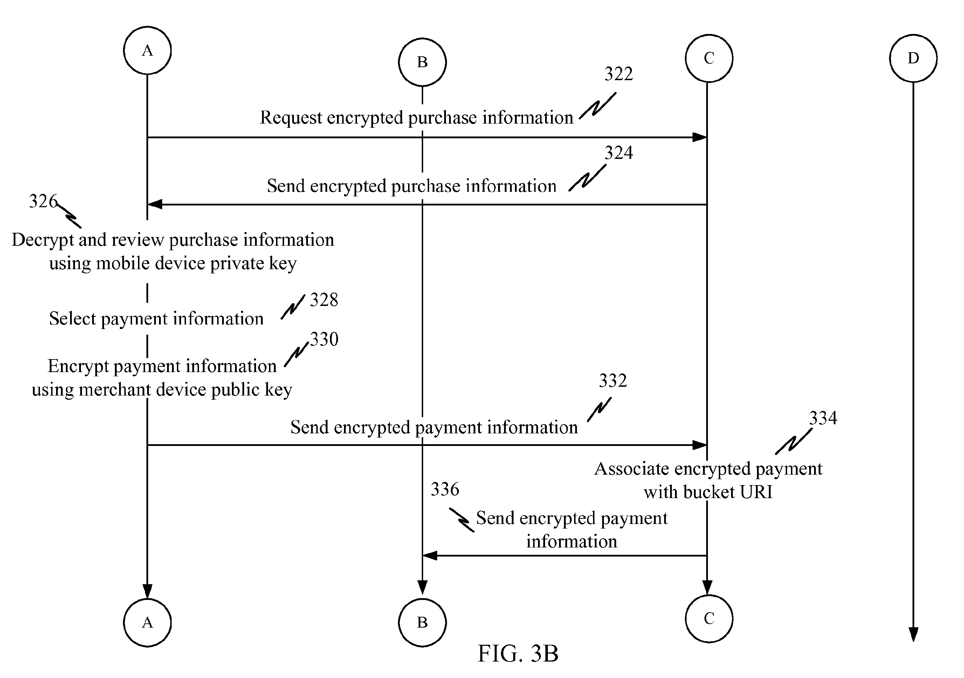

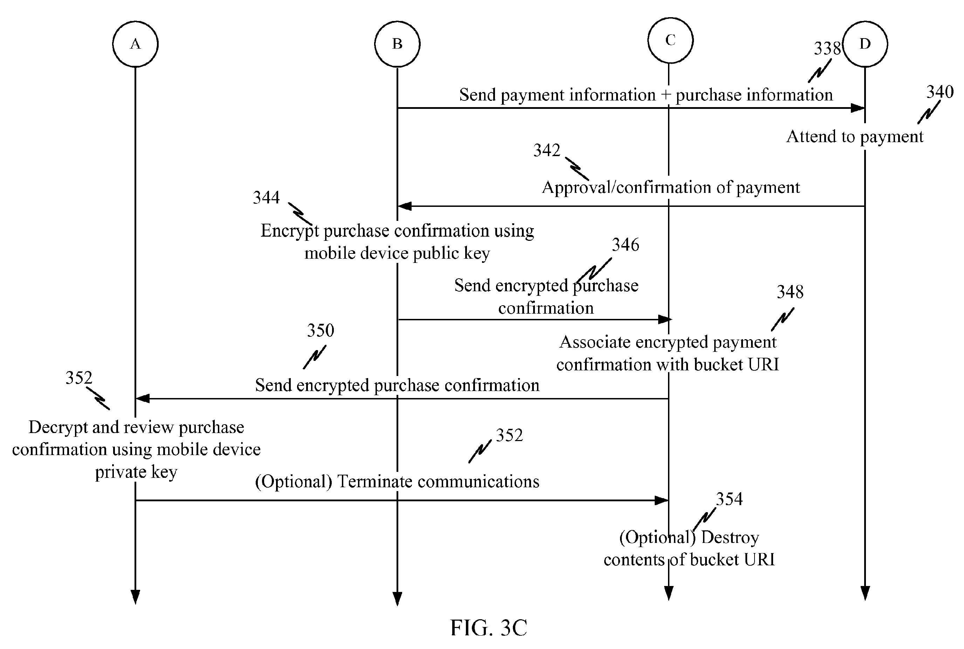

FIG. 3 (comprising FIGS. 3A, 3B and 3C) is a flow diagram illustrating the operation of a wireless communication system in which an invitee communication device may be used to communicate with an inviter communication device. In this example, invitee communication device 102, inviter communication device 104, server 108 and financial institution 110 of FIG. 1 are used for illustration purposes.

While the present invention is described primarily with respect to a financial transaction between an inviter communication device and an invitee communication device, the present invention may be applied and adapted to any type of communication session between two or more entities, parties or devices.

A user can use an inviter communication device (mobile device) 104 to securely conduct a financial transaction with an invitee communication device (merchant device) 102. The mobile device communication device can generate or obtain a mobile device public/private key pair comprising a mobile device public key and a corresponding mobile device private key 302.

In accordance with one embodiment, the bucket uniform resource identifier may be used to conduct a financial transaction between the mobile device and the merchant device. To utilize the mobile device to complete a financial transaction, such as the purchase of a product, the user can log into the system, described below in further detail. After logging into the system, the mobile device can generate an identifier that is used to identify the mobile device 304. In one implementation, the code can be a two-dimensional (2D) code, such as a Quick Response (QR) code. The code can be displayed on a screen of the mobile device allowing the user to present the code to the merchant device 306. The merchant device can include a digital scanner or card reader allowing the merchant device to read and obtain the identifier from the mobile device.

Upon receiving the identifier, the merchant device may send the identifier to the server to validate or authenticate the identifier and the mobile device 308. Upon validation, the server may generate or obtain a bucket and/or bucket uniform resource identifier (URI) 310. Next, the server can send the bucket URI to the merchant device for exchanging data messages with the mobile device 312. The merchant device may have generated or obtained a merchant device public/private key pair comprised of a merchant device public key and a corresponding merchant device private 313.

After the identifier has been validated and the bucket URI has been received by the merchant device, the merchant device may encrypt data messages, such as purchase information, using the mobile device public key 314 and send or push the encrypted purchase information, along with the merchant device public key, to the server 316. The encrypted purchase information and merchant device public key may be stored at or associated (linked) with the bucket URI 318. Upon receiving the encrypted purchase information and the merchant device public key, the server may then send the bucket URI along with the merchant device public key to the mobile device 320.

After receiving the bucket URI, the mobile device may request 322 and the server may provide 324, using long polling as described above (see FIG. 2), the encrypted purchase information stored at or associated (linked) with by the bucket URI on the server. Upon receiving the encrypted purchase information 324, the mobile device may decrypt the purchase information using the mobile device private key and review to confirm the purchase information is accurate 326. If the purchase information is accurate, the user can select a method of payment or a financial account for which to apply payment for the purchase 328. In one implementation, payment methods or financial accounts can include credit cards, debit cards, gift cards, reward miles, reward cards, PayPal^{®}, direct debit or direct withdrawal from a bank account. The user can set up one or more financial accounts associated with the mobile device to choose from. Once the financial account for which to apply payment has been selected, the payment information can be encrypted using the merchant device public key 330. The payment information can include credit card information and may be stored encrypted on the mobile device or can be stored at an outside location. Once the payment information has been selected and retrieved, it is encrypted, sent to the server 332 and stored in the bucket and/or associated with the bucket URI 334. The server may provide 336, using long polling as described above (see FIG. 2), the encrypted payment information stored in the bucket and/or associated with the bucket URI to the merchant device.

To receive payment, the merchant device may send the payment information, along with the purchase information (i.e. amount to be charged to the user), to the financial institution 338. The financial institution can then complete or attend to the payment with the mobile device for the purchase amount 340. If the charge is successful, an approval acknowledgment can be sent to the merchant device 342. The merchant device can then encrypt the purchase confirmation using the mobile public key 344 and send the encrypted purchase confirmation to the server 346 where it is stored in the bucket and/or associated with the bucket URI 348. The server may provide 350, using long polling as described above, the encrypted purchase confirmation stored in the bucket and identified by the bucket URI to the mobile device. Using the mobile device private key, the mobile device can decrypt the purchase confirmation completing the transaction 352. Optionally, the mobile device can then notify the server that the transaction is complete and communications are terminated 354. Upon receiving the notification from the mobile device, the server can destroy the data messages stored in the bucket and/or associated with the bucket URI 356. Alternatively, the data messages may be destroyed after a pre-determined amount of time. The pre-determined amount of time can be determined from the last usage (message exchange) or from the initial generation of the bucket and bucket URI. In one implementation, the user or mobile device can determine these security settings.

### Exemplary Mobile Device

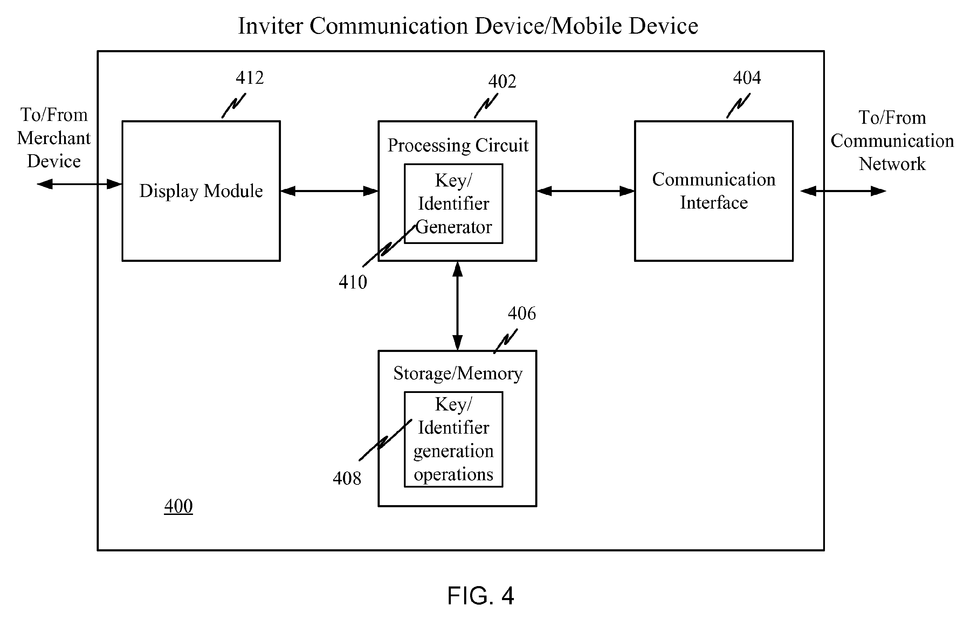

FIG. 4 is a block diagram illustrating an example of an inviter communication device (or mobile device) 400 configured to establish a communication session with an invitee communication device (or merchant device). The mobile device 400 may include a processing circuit 402 (e.g., processor, processing module, etc.) coupled to a communication interface 404 to communicate with a network, such as the Internet, and a memory device 406 to locally store, for example, public keys, private keys and transaction information, such as receipts. The memory/storage device 406 may include operations (instructions) to generate a public/private key pair and an identifier, such as a QR code 408. The processing circuit 402 may implement these operations and/or include a key/identifier generator 410 that implements these operations. The processing circuit 402 may be coupled to a display module 412 for displaying transaction information and an identifier to be presented to the merchant device.

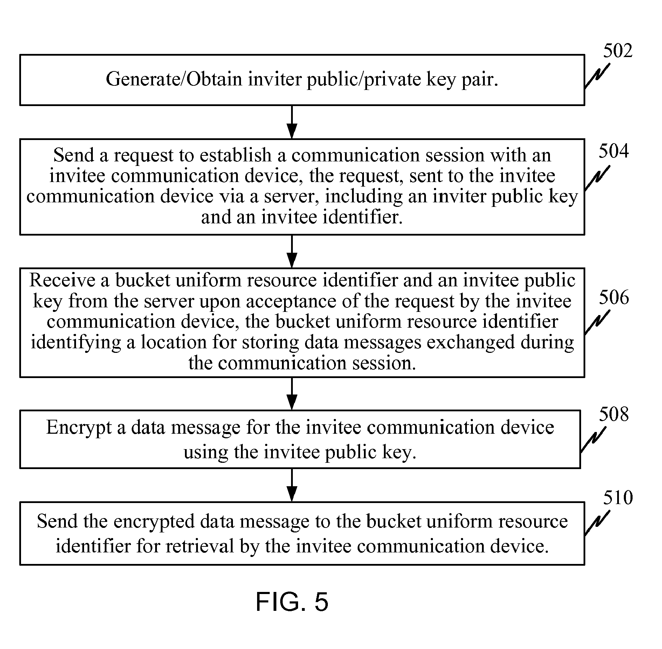

FIG. 5 is a flow diagram illustrating a method operational in an inviter communication device for establishing a communication session with an invitee communication device.

To establish the communication session, the inviter communication device can generate or obtain an inviter public/private key pair comprising an inviter public key and a corresponding inviter private key 502. Next, a request for the communication session with the invitee communication device may be sent to a server, the request including the inviter public key and an invitee identifier. The server may establish a bucket uniform resource identifier (URI) to store and exchange data messages between the inviter communication device and the invitee communication device. Using the invitee identifier, the server may send a query or request to the invitee communication device requesting the establishment of the communication session with the inviter communication device 504.

Upon acceptance by the invitee communication device, the inviter communication device may receive the bucket URI along with an invitee public key from the server 506. When communicating with the invitee communication device, the inviter communication device may encrypt data messages using the invitee public key it received from the server 508 and send the encrypted data to the bucket via the bucket URI for later retrieval by the invitee communication device using long polling as discussed above 510.

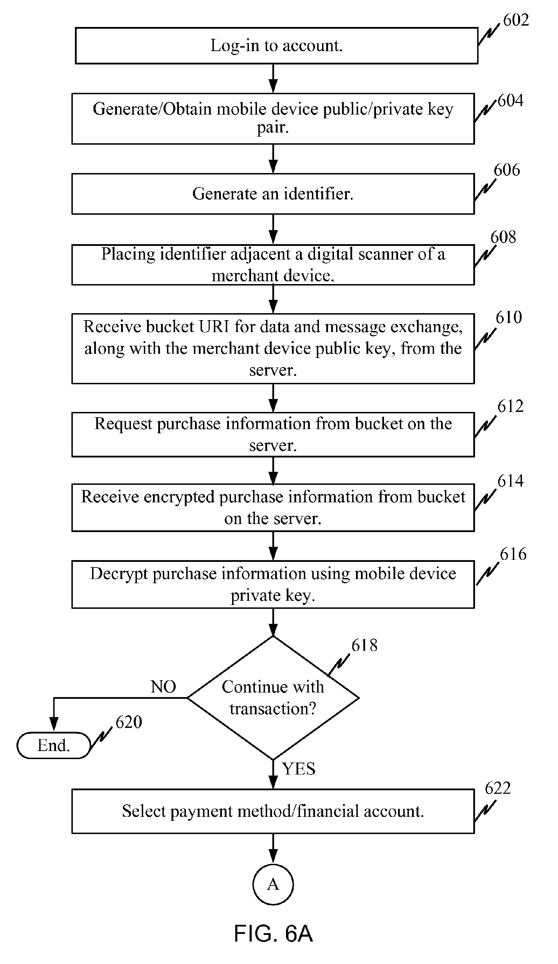

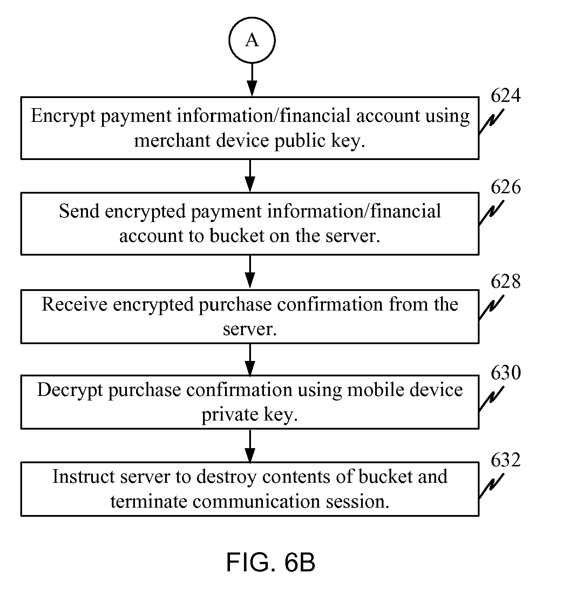

In one implementation, the communication session can be a financial transaction with the invitee communication device. The invitee communication device can be a point of sale terminal and the inviter communication device can be a mobile device. FIG. 6 (comprising FIGS. 6A and 6B) is a flow diagram illustrating an exemplary method operational in a mobile device for conducting a financial transaction with a merchant device. First, a user, via the mobile device, can log-in to an account for facilitating the transaction with the merchant device 602. Once logged in, the mobile device can generate or obtain a mobile device public/private key pair comprising a mobile device public key and a corresponding mobile device private key 604. Next, an identifier, such as a Quick Response (QR) code, or barcode, can be generated for display to the merchant device to begin a purchase process 606. The identifier can be provided to the merchant device via a digital scanner integrated into, or externally connected to the merchant device 608.

Next, a bucket uniform resource identifier (URI), along with a merchant device public key, can be received from the server 610. Upon receiving the bucket URI and merchant public key from the server, the mobile device may request purchase information from the bucket on the server via the bucket URI 612. In response to the request, the server may provide encrypted purchase information to the mobile device 614. Using the mobile device private key, the mobile device can decrypt the encrypted purchase information 616. After decrypting the purchase information, the mobile device may review the transaction information and determine whether or not to continue with the purchase 618. If it is determined that the product is no longer wanted, the mobile device may end the transaction 620. Conversely, if it is determined to proceed with the purchase or transaction, the mobile device may select payment information or financial account information to be used to complete the transaction 622.

Once the payment information or financial account information has been selected, this information may be encrypted using the merchant device public key 624 and sent to the server for storage in or association (linked) with the bucket URI for retrieval by the merchant device 626. Next, the mobile device may receive an encrypted purchase confirmation from the bucket on the server 628. Using the mobile device private key, the encrypted purchase confirmation may be decrypted 630. Optionally, as the transaction has been completed and the mobile device has received confirmation of the completed purchase, the mobile device may notify the server of the completed transaction and instruct the server to destroy the data messages or content in the bucket and/or associated with the bucket URI to terminate the communication exchange with the merchant device 632.

### Exemplary Merchant Device

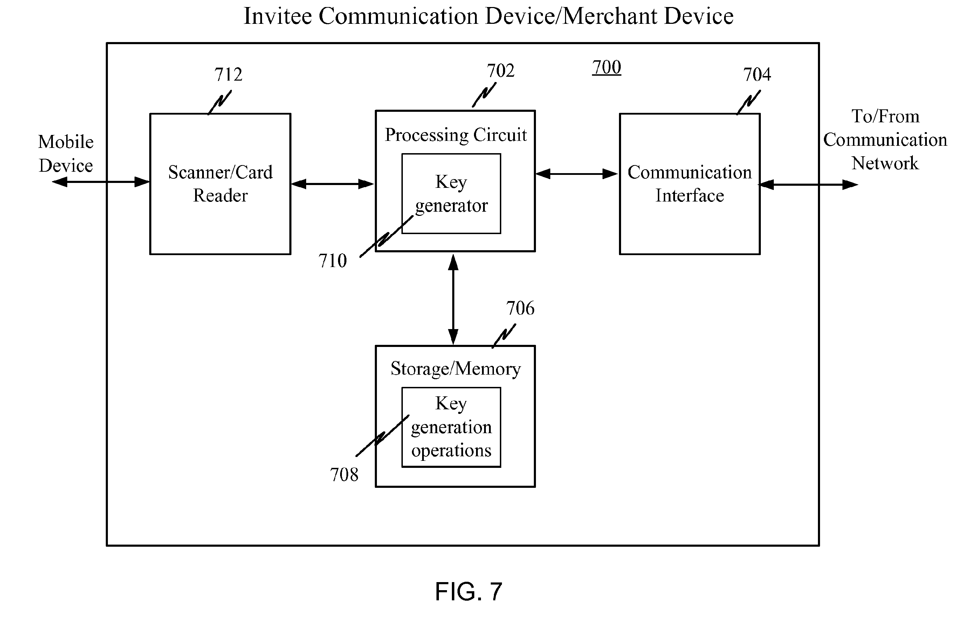

FIG. 7 is a block diagram illustrating an example of an invitee communication device 700 configured to establish a communication session with an inviter communication device. The invitee communication device 700 may include a processing circuit 702 (e.g., processor, processing module, etc.) coupled to a communication interface 704 to communicate with a network, such as the Internet, and a memory device 706 to locally store transaction information, public keys, private keys, bucket URI and the like. The memory/storage device 706 may include operations (instructions) to generate a public/private key pair 708. The processing circuit 702 may implement these operations and/or include a key generator 710 that implements these operations. The processing circuit 702 may be coupled to a digital scanner or card reader 712 which can be integrated into, or attached externally to, the invitee communication device and utilized to read or scan an identifier displayed on the screen of the inviter communication device.

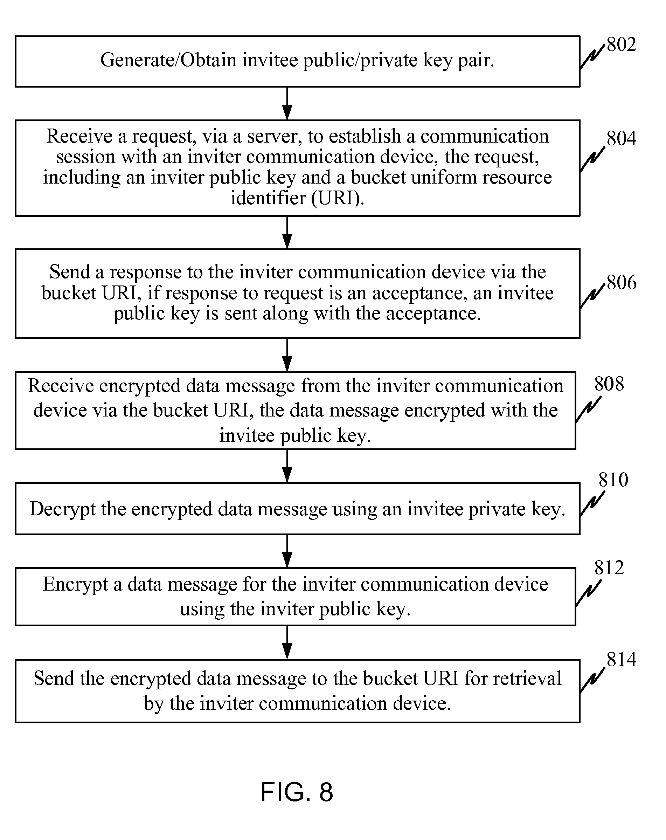

FIG. 8 is a flow diagram illustrating a method operational in an invitee communication device for establishing a communication session with an inviter communication device. To establish the communication session, the invitee communication device can generate or obtain an invitee public/private key pair comprising an invitee public key and a corresponding invitee private key 802.

Next, a request for the communication session with the inviter communication device may be received from a third party, such as a server. The request can include an inviter public key and a bucket uniform resource identifier (URI) to store and exchange data messages between the inviter communication device and the invitee communication device 804.

The invitee communication device can opt to decline the request to join the communication session or opt to accept the request to join the communication session. If the request is declined, the decision to decline can be sent to the inviter communication device. Alternatively, the invitee communication device can accept the request. Upon acceptance of the request, the invitee communication device may send its acceptance or response to the bucket URI along with the invitee public key 806.

The invitee communication device can receive encrypted data messages from the inviter communication device via the bucket and/or bucket URI, the data messages encrypted with the invitee public key 808. The data message may then be decrypted by the invitee communication device using the invitee private key 810. Conversely, the invitee communication device may encrypt a data message using the inviter public key it received from the inviter communication device via the bucket and/or bucket URI 812 and send the encrypted data message to the bucket via the bucket URI for later retrieval by the inviter communication device using long polling as discussed above 814.

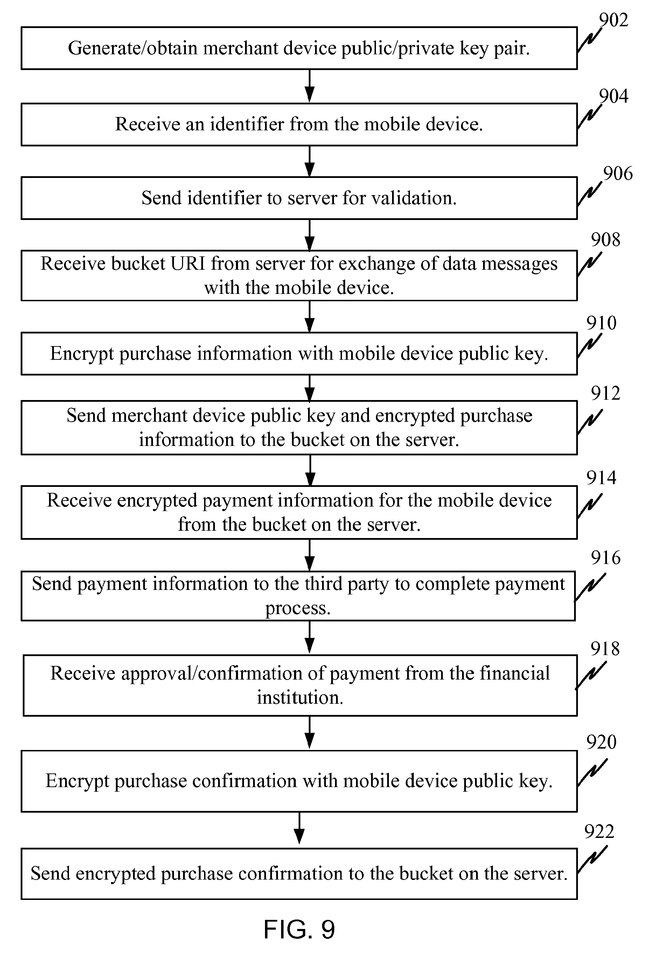

As discussed above, in one implementation the communication session can be financial transaction between the inviter communication device and the invitee communication device. In such a transaction, the invitee communication device can include a point of sale terminal or a merchant device and the inviter communication device can include a mobile device. FIG. 9 is a flow diagram illustrating a method operational in a merchant device (invitee communication device) for conducting a financial transaction with a mobile device (inviter communication device). To establish the communication session, the merchant device can generate or obtain a merchant device public/private key pair comprising a merchant device public key and a corresponding merchant device private key 902.

When purchasing a product the mobile device may present an identifier such as a two dimension code (for example a QR code) to a digital scanner or card reader of the merchant device. The digital scanner can read the identifier from the display of the mobile device 904 and send the identifier to a server for validation and generation of the bucket and bucket URI 906. Upon validation of the identifier, the merchant device may receive the bucket URI from the server for exchanging data messages with the mobile device 908. Using the mobile device public key, the merchant device may encrypt purchase information 910 and send its merchant device public key, along with the encrypted purchase information to the server to be stored in the bucket and/or associated (linked) with the bucket URI 912. The purchase information can include an itemized list of products to be purchased as well at the cost of each product.

Next, the merchant device may receive encrypted payment information for the purchase by the mobile device via the bucket on the server and the bucket URI 914 and then send this payment information to a third party, such as a financial institution, to complete the payment process 916. The merchant device may then receive approval/confirmation of the payment from the third party financial institution 918. The purchase confirmation may then be encrypted using the mobile device public key 920 and sent to the server for storage in or association with the bucket and bucket URI and later retrieval by the mobile device 922.

### Exemplary Server

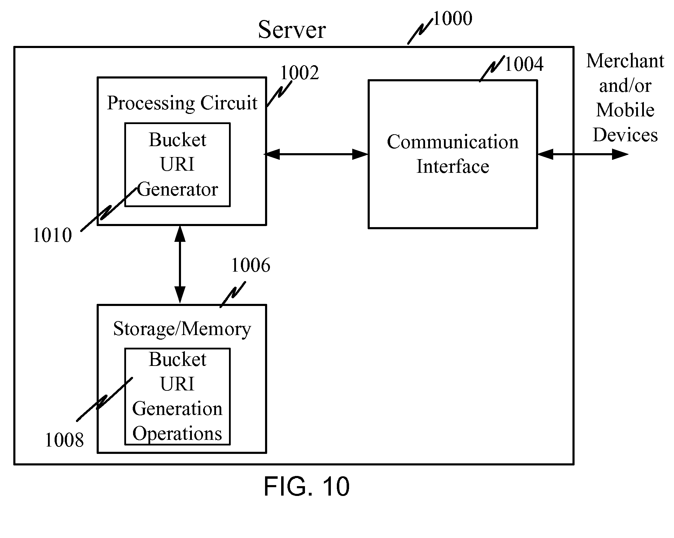

FIG. 10 is a block diagram illustrating an example of a server 1000 configured to establish a communication session between an inviter communication device and an invitee communication device. The server 1000 may include a processing circuit 1002 (e.g., processor, processing module, etc.) coupled to a communication interface 1004 to communicate with a network, such as the Internet, and a memory device 1006 to locally store, for example, public keys, private keys, transaction information and bucket URI information. The memory/storage device 1006 may include operations (instructions) to generate a bucket and bucket URI 1008. The processing circuit 1002 may implement these operations and/or include a bucket and/or bucket URI generator 1010 that implements these operations.

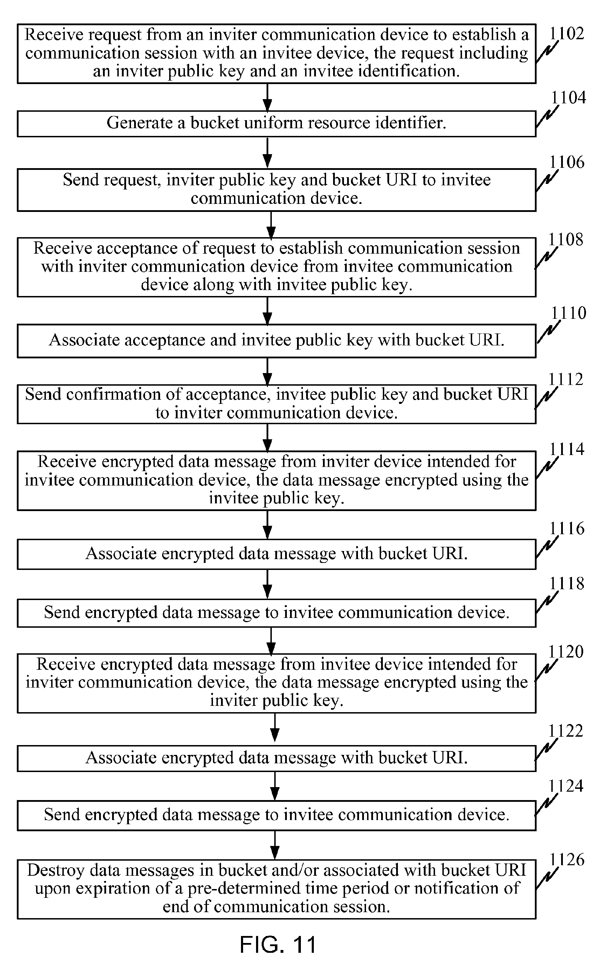

FIG. 11 is a flow diagram illustrating an exemplary method operational in a server for facilitating a communication session between an invitee communication device and an inviter communication device. First, the server can receive a request from the inviter communication device to establish a communication session with the invitee communication device, the request including an inviter public key and an invitee identification 1102. The server may then generate or establish a bucket uniform resource identifier (URI) for the exchange of data messages between the inviter communication device and the invitee communication device 1104. Using the invitee identification, the server may send a query or request to the invitee communication device, on behalf of the inviter communication device, requesting the establishment of the communication session with the inviter communication device 1106.

The server may receive a response to the request from the invitee communication device. The response can include a decline of the invitation (or request) to join the communication session or an acceptance of the invitation (or request) to join the communication session. If the request is declined, the decision to decline can be sent to the inviter communication device. Alternatively, if the invitee communication device accepts the request, an acceptance of the request is received along with an invitee public key 1108. The acceptance can be stored in the bucket and/or associated with the bucket URI 1110 and then a confirmation of the acceptance can be sent or pushed to the inviter communication device 1112.

The server may receive encrypted data messages from the inviter communication device intended for the invitee communication device, the data messages encrypted with the invitee public key 1114. The encrypted data messages can be stored in the bucket and/or associated with the bucket URI 1116 and then sent or pushed to the invitee communication device 1118.

The server may also receive encrypted data messages from the invitee communication device intended for the inviter communication device, the data messages encrypted with the inviter public key 1120. The encrypted data messages can be stored in the bucket and/or associated with the bucket URI 1122 and then sent or pushed to the inviter communication device 1124.

After the communication session has been terminated, the server can destroy all data messages in the bucket and/or associated with the bucket URI. The communication session can be terminated upon expiration of a pre-determined time period or a notification of the end of the session by either the invitee or inviter communication device 1126. The pre-determined amount of time can be determined from the last usage (message exchange) or from the initial generation of the bucket and bucket URI.

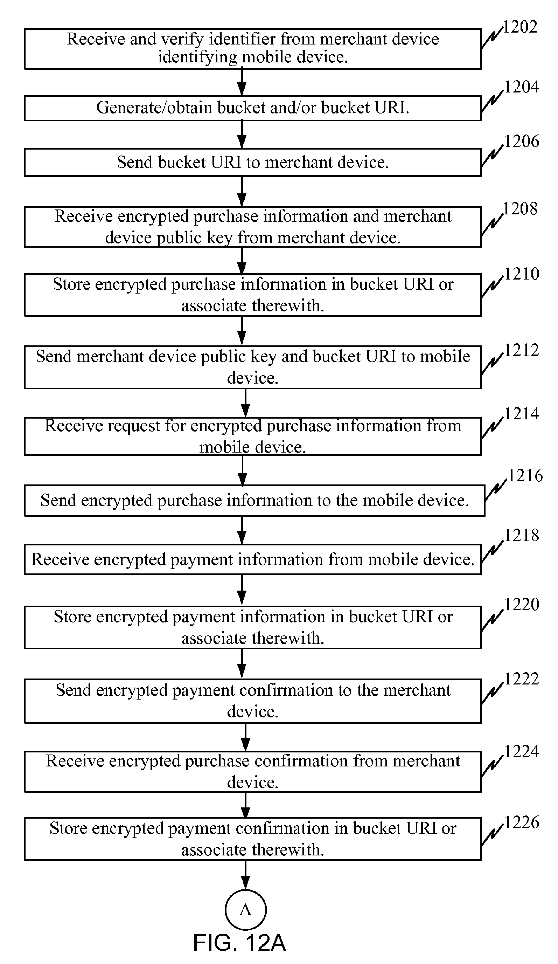

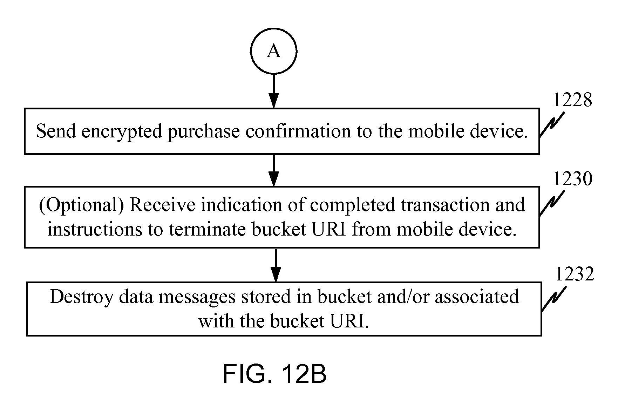

FIG. 12 (comprising FIGS. 12A and 12B) is a flow diagram illustrating an exemplary method operational in a server for facilitating a financial transaction between a mobile device and a merchant device. First, the server can receive and verify an identifier from the merchant device identifying the mobile device 1202. Upon validation of the identifier, a bucket and/or bucket URI may be generated or obtained for the exchange of data messages between the mobile device and the merchant device 1204. The bucket URI may then be sent to the merchant device 1206.

Next, encrypted purchase information and a merchant device public key may be obtained from the merchant device 1208 and stored in the bucket and/or associated with the bucket URI 1210. The merchant device public key and the bucket URI may be sent to the mobile device 1212. A request may then be received from the mobile device for the encrypted purchase information stored in the bucket and/or associated with the bucket URI 1214. In response to the request from the mobile device, the server may send the encrypted purchase information to the mobile device for review 1216.

Next, encrypted purchase information may be received from the mobile device 1218 and stored in the bucket and/or associated with the bucket URI 1220. The encrypted payment information is then sent to the merchant device 1222. Encrypted purchase confirmation may then be received from the merchant device 1224 and stored in the bucket and/or associated with the bucket URI 1226. Next, the encrypted purchase confirmation can be sent to the mobile device 1228. Optionally, an indication of the completed transaction and instructions to terminate the bucket URI may be received from the mobile device 1230. The merchant device may then destroy all data messages stored in the bucket and/or associated with the bucket URI 1232.

### Log-In Process

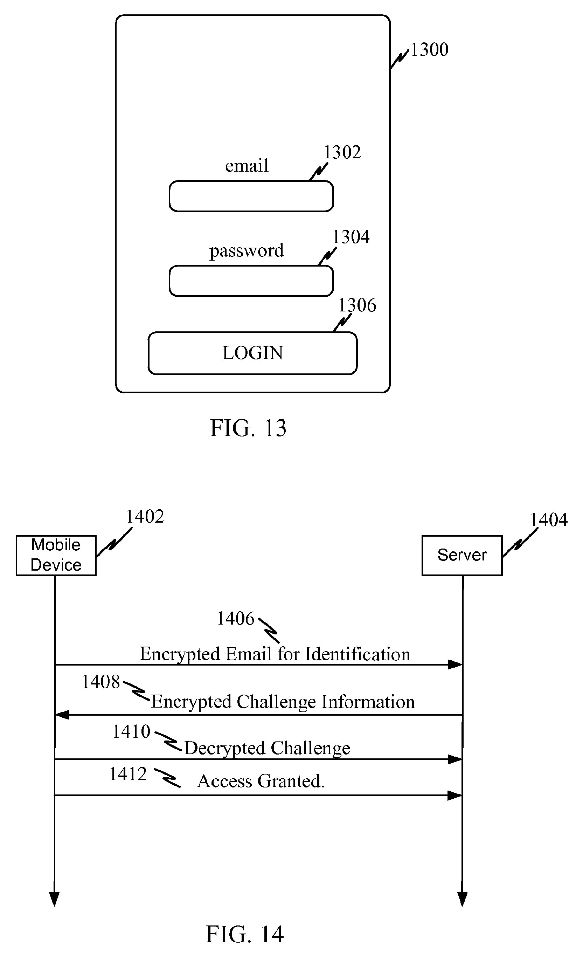

FIG. 13 illustrates a log-in screen 1300 in accordance with an embodiment of the present invention. To log-in, a user can enter valid a username and password into respective email (or username) 1302 and password 1304 fields. The log-in screen 1300 may provide a link if the user forgets his or her username and/or password. Upon entering a username and password, the user may then select a login button 1306 to proceed.

FIG. 14 is a flow diagram illustrating one example of authenticating a mobile device prior to establishing a communication session with a merchant device. In this example, the mobile device 1402 can communicate with a server 1404 over a wireless communications network.

After logging on, as described above, the mobile device can establish a network path or connection to the server to anonymously identify itself to the server. An email, encrypted with the password, can be sent to the server for identification 1406. In one implementation, the Advanced Encryption Standard (AES) with a 256-bit encryption key may be used. As neither the email address nor the password is actually provided to the server, identification can be done anonymously.

Upon receiving the encrypted email, the server may generate and send encrypted challenge information to the mobile device 1408. Upon receiving such encrypted challenge information, the mobile device can decrypt the encrypted challenge. Using the decrypted challenge information, the mobile device can encrypt the challenge information using its password and send to the server as its response to the challenge 1410. The server then verifies the response and, if successful, sends an access granted message, in the form of a token, to the mobile device allowing the mobile device to effect a communication session with a merchant device 1412. In one implementation, the communication session can be a financial transaction with the merchant device. In accordance with one embodiment, the token may be specific to the merchant device and the communication session with the mobile device. Additionally, the token may only be valid for a specified time period, for example 1 hour. After the expiration of the specified time period, the token may expire ending the specific communication session.

### Identifier Screen

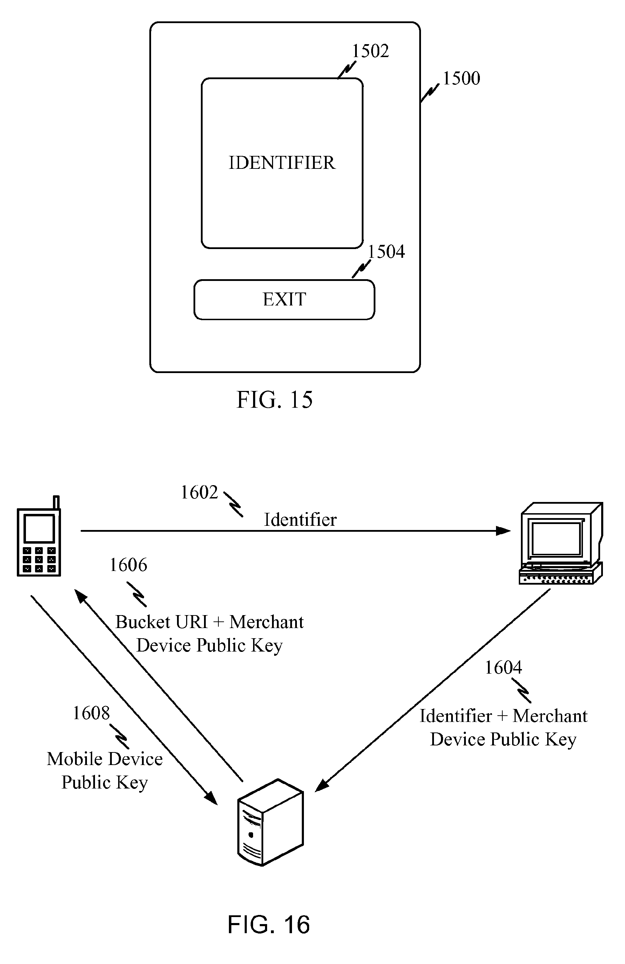

FIG. 15 illustrates an identifier screen 1500 in accordance with an embodiment of the present invention. In one implementation, the identifier can be a two-dimensional (2D) code, such as a Quick Response (QR) code. Once the mobile device has been verified, the mobile device can generate the identifier and display it on a screen 1502 of the mobile device allowing the user to present the identifier to the merchant device. An 'exit' button on the identifier screen can allow the user to discontinue the communication session or transaction.

### Bucket URI Initialization Process

FIG. 16 is a flow diagram illustrating initialization of a bucket URI for a specific communication session between the mobile device and the merchant device. After verification of the mobile device, an identifier can be generated and presented to the merchant device, as described above 1602. The merchant device can read the identifier using a digital scanner or card reader and then send the identifier, along with a merchant device public key, to a server 1604. The server can then generate a bucket and/or bucket URI and send the bucket URI, along with the merchant device public key, to the mobile device 1606. In response to receiving the bucket URI and merchant public key from the server, the mobile device may then provide its mobile device public key to the server via the bucket and/or bucket URI 1608.

### Transaction Summary Screen

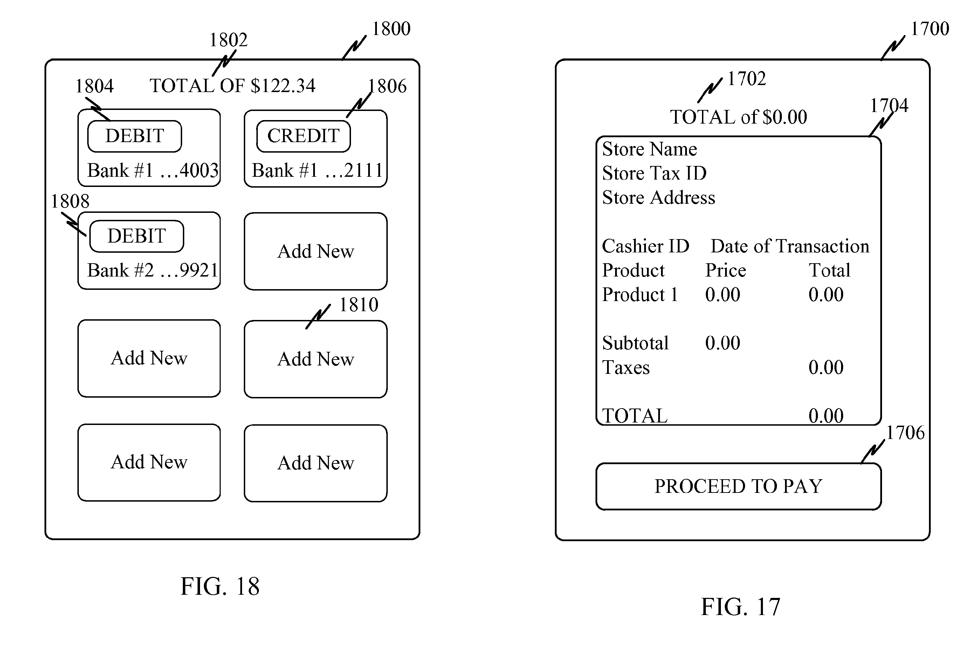

FIG. 17 illustrates a transaction summary screen 1700 in accordance with an embodiment of the present invention. After the mobile device has been verified and the bucket and/or bucket URI has been established, the mobile device may receive a summary of the transaction for review. The summary can include the total purchase amount of the transaction 1702 as well as additional transaction information, including but not limited to, the name and address of the merchant, the tax identifier of the merchant, the item to be purchased, the date and an itemized list of the costs 1704. After review of the summary, a 'proceed to pay' button may be selected 1706 prompting the user to select a method of payment, or financial account, for the transaction.

### Payment Screen

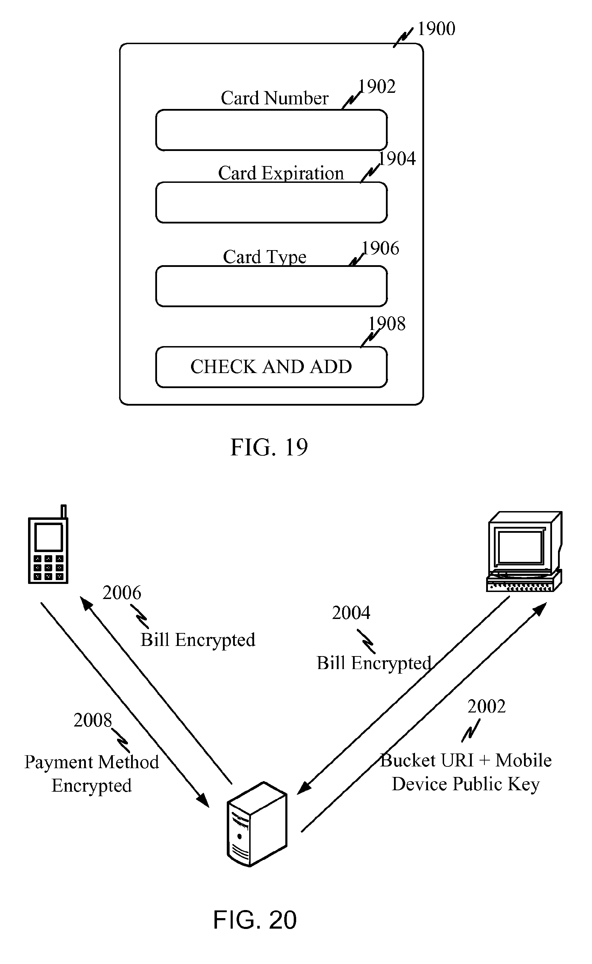

FIG. 18 illustrates a payment screen 1800 in accordance with an embodiment of the present invention. Upon selection of the 'proceed to pay' button as described above, a payment screen 1800 can be displayed on the mobile device. The payment screen can identify the total cost 1802 to be paid for the transaction and multiple payment methods or financial accounts which can be selected to pay for the purchase. As an example, the user can select from a first payment method (financial account) 1804, a second payment method (financial account) 1806 or a third payment method (financial account) 1808. As shown, the first and third payment methods 1804, 1808 can be debit cards and the second payment method is a credit card 1806. By selecting a payment method, the mobile device can then send the corresponding payment information to the merchant device. Additional payment methods (financial accounts) may be added by selecting an 'Add New' button 1810. Upon selecting the 'Add New' button 1810, the user can receive an add payment screen 1900 as shown in FIG. 19. Using the add payment screen, a new payment method may be added by entering information such as a card number 1902, card expiration date 1904 and type of card 1906 (i.e. debit, credit, gift or pre-paid). After the card information has been entered, a 'check and add' button 1908 may be selected adding the card to available payment options.

### Payment Process

FIG. 20 is a flow diagram illustrating a method of payment between the mobile device and the merchant device. As described above, the server can establish a bucket and/or bucket URI. The server can send the bucket URI, along with the mobile device public key to the merchant device 2002. Once the merchant device has the bucket URI, the merchant device can send an encrypted bill to the mobile device via the bucket URI on the server 2004. The bill can be encrypted using the mobile device public key. The server can send or push the encrypted bill to the mobile device 2006. As discussed above with reference to FIGS. 18-19, the user can select a payment method (financial account) which is then encrypted using the mobile device public key and sent to the bucket via the bucket URI on the server for retrieval by the merchant device 2008.

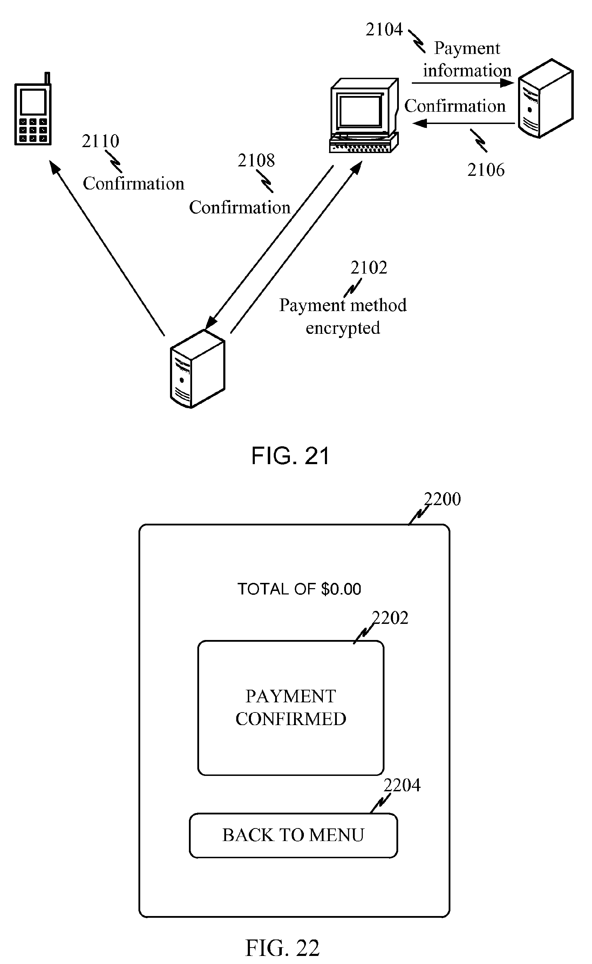

FIG. 21 is a flow diagram illustrating a payment transaction between the mobile device and the merchant device. Upon receiving the encrypted payment information from the mobile device, the server can send or push the encrypted payment method to the merchant device 2102 and the merchant device can send the payment information to a financial institution to perform the transfer of funds 2104. Upon completion of the transfer of funds, or charge, the financial institution can send a confirmation of the payment to the merchant device 2106. In response to the confirmation, the merchant device can send or push an encrypted purchase confirmation to the bucket URI on the server 2108. The purchase can be encrypted with the mobile device public key. The server can then send or push the encrypted purchase confirmation to the mobile device using long polling as described above 2110.

FIG. 22 illustrates a payment confirmation screen 2200 in accordance with an embodiment of the present invention. Upon completion of the transaction, confirmation of the payment may be sent to the mobile device 2202. A 'back to menu' button 2204 may be selected to generate a main menu screen on the mobile device.

### Near Field Communications

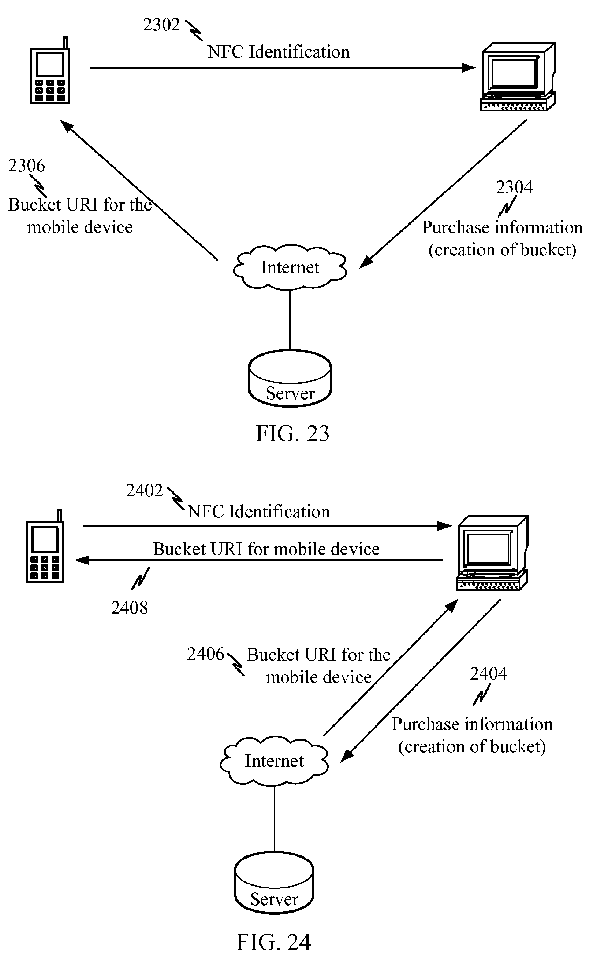

FIG. 23 is a flow diagram illustrating a financial transaction between a mobile device and a merchant device using near field communications (NFC). The mobile device may be placed within the NFC range, typically 4 cm or less, causing the NFC identification on the mobile device to be sent or transmitted to the merchant device 2302. In establishing a bucket and/or bucket URI, the merchant device connects to the server via a network connection and sends or pushes purchase information to the bucket on the server via the bucket URI 2304. In response, the server can generate or obtain a bucket URI for a specific communication session with the merchant device and send or push the bucket URI to the mobile device 2306.

### Communication - No Network Connectivity for Mobile Device

FIG. 24 is a flow diagram illustrating a financial transaction between a mobile device and a merchant device using near field communications (NFC). NFC allows communication between the mobile device and the merchant device when an Internet or network connection is unavailable for the mobile device. The mobile device can connect to the server through NFC via the merchant device allowing for communication using a bucket and/or bucket URI.

The mobile device may be placed within the NFC range, typically 4 cm or less, causing the NFC identification on the mobile device to be sent or transmitted to the merchant device 2402. In establishing a bucket and/or bucket URI, the merchant device connects to the server via a network connection and sends or pushes purchase information to the server 2404. In response the server can generate or obtain a bucket and/or bucket URI for a specific communication session with the merchant device 2406. The merchant device can then send or push the bucket URI to the mobile device 2408.

In one implementation, the communications can be encrypted end to end with RSA-2048 in addition to AES 256. As a result, there is no risk in the merchant device acting as a proxy for the mobile device.

### Communication - No Network Connectivity

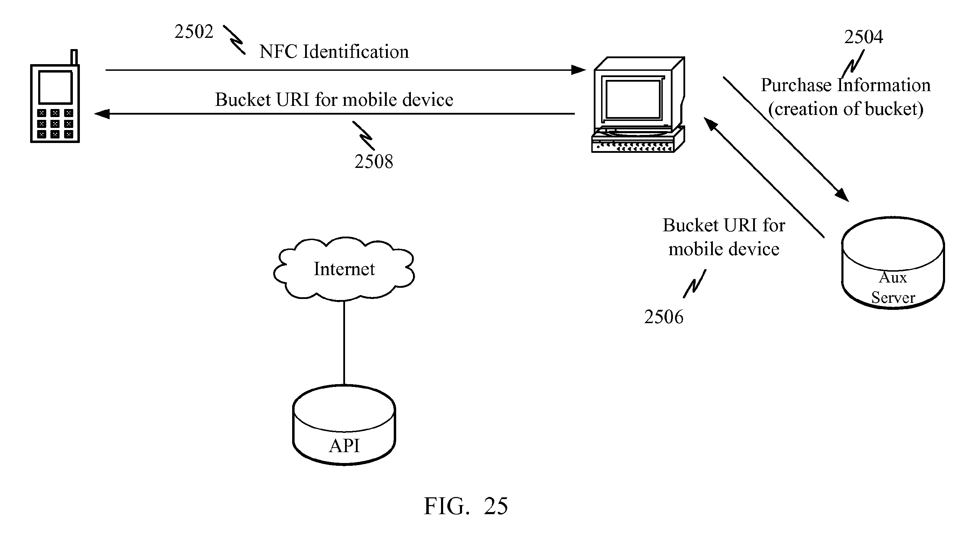

FIG. 25 is a flow diagram illustrating a financial transaction between a mobile device and a merchant device using near field communications (NFC) with no network connectivity.

The mobile device may be placed within the NFC range, typically 4 cm or less, causing the NFC identification on the mobile device to be sent or transmitted to the merchant device 2502. When no network connectivity is available for the mobile device or the merchant device, the merchant device can send or push purchase information to an auxiliary server in the merchant device when a modem connection is enforced 2204. In establishing a bucket URI, the merchant device connects to the server sends or pushes purchase information to the server 2504.

In response, the auxiliary server can generate or obtain a bucket and/or bucket URI for a specific communication session with the merchant device 2506. The merchant device can then send or push the bucket URI to the mobile device 2508. When network connectivity is established and the modem in the merchant device can connect to the Internet, they can be an accommodation of the transactions with the main or central server.

One or more of the components, steps, features and/or functions illustrated in the FIGS. may be rearranged and/or combined into a single component, step, feature or function or embodied in several components, steps, or functions. Additional elements, components, steps, and/or functions may also be added without departing from novel features disclosed herein. The apparatus, devices, and/or components illustrated in the FIGS. may be configured to perform one or more of the methods, features, or steps described in the FIGS. The novel algorithms described herein may also be efficiently implemented in software and/or embedded in hardware.

Also, it is noted that at least some implementations have been described as a process that is depicted as a flowchart, a flow diagram, a structure diagram, or a block diagram. Although a flowchart can describe the operations as a sequential process, many of the operations can be performed in parallel or concurrently. In addition, the order of the operations can be re-arranged. A process is terminated when its operations are completed. A process can correspond to a method, a function, a procedure, a subroutine, a subprogram, etc. When a process corresponds to a function, its termination corresponds to a return of the function to the calling function or the main function.

Moreover, embodiments can be implemented by hardware, software, firmware, middleware, microcode, or any combination thereof. When implemented in software, firmware, middleware or microcode, the program code or code segments to perform the necessary tasks can be stored in a machine-readable medium such as a storage medium or other storage(s). A processor can perform the necessary tasks. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted via any suitable means including memory sharing, message passing, token passing, network transmission, etc.

Furthermore, embodiments may be implemented by hardware, software, firmware, middleware, microcode, or any combination thereof. When implemented in software, firmware, middleware or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The terms "machine-readable medium", "computer-readable medium", and/or "processor-readable medium" can include, but are not limited to portable or fixed storage devices, optical storage devices, and various other non-transitory mediums capable of storing, containing or carrying instruction(s) and/or data. Thus, the various methods described herein can be partially or fully implemented by instructions and/or data that can be stored in a "machine-readable medium", "computer-readable medium", and/or "processor-readable medium" and executed by one or more processors, machines and/or devices.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein can be embodied directly in hardware, in a software module executable by a processor, or in a combination of both, in the form of processing unit, programming instructions, or other directions, and can be contained in a single device or distributed across multiple devices. A software module can reside in RAM memory, flash memory, ROM memory, EPROM memory, EEPROM memory, registers, hard disk, a removable disk, a CD-ROM, or any other form of storage medium known in the art. A storage medium can be coupled to the processor such that the processor can read information from, and write information to, the storage medium. In the alternative, the storage medium can be integral to the processor.

Those of skill in the art would further appreciate that the various illustrative logical blocks, modules, circuits, and algorithm steps described in connection with the embodiments disclosed herein can be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The various features of the invention described herein can be implemented in different systems without departing from the invention. It should be noted that the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A method operational in an inviter communication device (104) for establishing a communication session, comprising:
sending a request to establish the communication session with an invitee communication device (102), the request, sent to the invitee communication device (102) via a server (108), includes an inviter public key and an invitee identifier; and
receiving a bucket uniform resource identifier and an invitee public key from the server (108) upon acceptance of the request by the invitee communication device (102), the bucket uniform resource identifier identifying a location for storing data messages exchanged during the communication session.

2. The method of claim 1, further comprising:
encrypting a data message for the invitee communication device (102) using the invitee public key; and
sending the encrypted data message to the bucket uniform resource identifier for retrieval by the invitee communication device (102), the bucket uniform resource identifier located on the server (108).

3. The method of claim 1 or 2, further comprising:
receiving a data message from the bucket uniform resource identifier on the server (108), the data message sent by the invitee communication device (102) to the bucket uniform resource identifier and encrypted using the inviter public key; and
decrypting the message using an inviter private key.

4. The method of claim 1, 2 or 3, further comprising:
receiving encrypted purchase information, encrypted with the inviter public key, from the invitee communication device (102) via the bucket uniform resource identifier on the server (108), the encrypted purchase information identifying a product to be purchased by the inviter communication device (104);
decrypting the encrypted payment information using the inviter private key;
selecting a financial account to pay for the financial transaction; and
encrypting financial account information using the inviter public key and sending the encrypted financial account information to the invitee communication device (102) via the bucket uniform resource identifier on the server (108).

5. A method operational in an invitee communication device (102) for establishing a communication session, comprising:
receiving a request to establish the communication session with an inviter communication device (104) via a server (108), the request including an inviter public key and a bucket uniform resource identifier, the bucket uniform resource identifier identifying a location on the server (108) for storing data messages exchanged during the communication session; and
sending an invitee public key to the bucket uniform resource identifier upon acceptance of the request.

6. The method of claim 5, further comprising:
receiving an encrypted data message from the inviter communication device (104) via the bucket uniform resource identifier, the encrypted data message encrypted with the invitee public key; and
decrypting the encrypted data message using an invitee private key.

7. The method of claim 5 or 6, further comprising:
encrypting a data message using an inviter public key; and
sending the encrypted data message to the bucket uniform resource identifier for retrieval by the inviter communication device (104).

8. The method of claim 5, 6 or 7, further comprising:
sending encrypted purchase information, encrypted with the inviter public key, to the bucket uniform resource identifier for sending to the inviter communication device (104), the encrypted purchase information identifying a product to be purchased by the inviter communication device (104);
sending the encrypted payment information to a third party to process payment for the product identified in the encrypted purchase information;
receiving confirmation of the processed payment;
encrypting the confirmation, using the inviter public key, and sending to the bucket uniform resource identifier for retrieval by the inviter communication device (104).

9. A method operational in a server (108) for establishing a communication session between an inviter communication device (104) and an invitee communication device (102), comprising:
receiving a request from the inviter communication device (104) to establish the communication session with the invitee communication device (102);
generating a bucket uniform resource identifier identifying a location on the server (108) for storing data messages exchanged during the communication session;
sending the request and bucket resource identifier to the invitee communication device (102); and
sending an invitee public key and the bucket uniform resource identifier to the inviter communication device (104) upon receiving a response accepting the request by the invitee communication device (102).

10. The method of claim 9, further comprising:
receiving an encrypted data message for the invitee communication device (102) from the inviter communication device (104), the encrypted message encrypted using the invitee public key;
associating the encrypted data message with the bucket uniform resource identifier; and
sending the encrypted data message to the invitee communication device (102).

11. The method of claim 9 or 10, further comprising:
receiving encrypted purchase information from the invitee communication device (102), encrypted with the inviter public key, the encrypted purchase information identifying a product to be purchased by the inviter communication device (104);
associating the encrypted purchase information with the bucket uniform resource identifier; and
sending the encrypted purchase information to the inviter communication device (104) for review.

12. The method of any preceding claim, wherein the data messages associated with the bucket uniform resource identifier are destroyed upon termination of the communications session or after a pre-determined amount of time.

13. The method of any preceding claim, wherein the invitee communication device (102) is a point of sale terminal and the inviter communication device (104) is a mobile device.

14. The method of any preceding claim, wherein the communication session is a financial transaction between the inviter communication device (104) and the invitee communication device (102).

15. An apparatus or system arranged to perform the method of any preceding claim.
